# FASCICULE DE BREVET EUROPEEN

(11) **EP 3 213 955 B1**
(45) Date de publication et mention de la délivrance du brevet: **04.12.2019**
(21) Numéro de dépôt: 17158756.1
(22) Date de dépôt: 01.03.2017
(51) Int. Cl.: B60L 53/12

(54) **INSTALLATION AMÉLIORÉE DE RECHARGE PAR CONDUCTION D'UN VÉHICULE**
VERBESSERTE ANLAGE ZUR WIEDERAUFLADUNG DURCH KONDUKTION EINES FAHRZEUGS
IMPROVED INSTALLATION FOR THE ELECTRIC CONDUCTION RECHARGING OF A VEHICLE

(30) Priorité: 02.03.2016 FR 1651787
(43) Date de publication de la demande: 06.09.2017
(73) Titulaire: ALSTOM Transport Technologies, 93400 Saint-Ouen (FR)
(72) Inventeur: HOURTANE, Jean-Luc, 13320 Bouc Bel Air (FR); MAURIN, François, 94240 L'Hay Les Roses (FR); NEVOT, Nicolas, 77330 Ozoir La Ferriere (FR)
(74) Mandataire: Lavoix

(56) Documents cités:
- JP-A- 2009 045 967
- JP-A- 2013 027 144
- US-A- 3 955 657
- US-B2- 8 465 303
- Tony Kuphaldt: "Lessons in Electric Circuits, Volume I, DC, Chapter 3 "ELECTRICAL SAFETY"", , 18 octobre 2006 (2006-10-18), pages 77-117, XP055392241, Extrait de l'Internet: URL:https://www.ibiblio.org/kuphaldt/elect ricCircuits/DC/DC.pdf [extrait le 2017-07-19]
- Michael Kent: "The EVSE GMI circuit: Should the standards be changed?", CHARGED Magazine , 14 janvier 2015 (2015-01-14), XP002763678, Extrait de l'Internet: URL:https://chargedevs.com/features/the-ev se-gmi-circuit-why-levitons-engineering-di rector-thinks-the-standards-should-change/ [extrait le 2016-09-13]

## Description

La présente invention concerne les installations de recharge par conduction des moyens de stockage d'énergie embarqués à bord de véhicules électriques ou hybrides, notamment les bus.

Un véhicule à pneus, tel qu'un bus, est spécifique au sens où son châssis (et sa caisse par continuité électrique) est normalement isolé électriquement de la terre, du fait de ses pneus et ceci par rapport au cas d'un véhicule ferroviaire, un tramway par exemple.

La recharge par conduction présente de nombreux avantage par rapport notamment à la recharge par induction. Elle permet une recharge plus rapide, avec un rendement plus élevé, et une infrastructure moins complexe et présentant un coût plus faible.

Pour la recharge par conduction d'un bus, il est actuellement envisagé de mettre en contact un dispositif embarqué relié aux moyens de stockage d'énergie avec un dispositif au sol relié à une source de puissance électrique de manière à établir simultanément quatre liaisons électriques :
- Une première liaison de neutre et une seconde liaison de phase pour le transfert de puissance électrique du sol vers le bord (ou en variante une première liaison négative et une seconde liaison positive) ;
- Une troisième liaison de terre afin de mettre le châssis du bus au potentiel de terre et assurer ainsi la sécurité des personnes autour du bus lors du transfert de puissance ; et,
- Une quatrième liaison de communication I permettant l'échange de données selon un protocole prédéfini entre le bord et le sol, par exemple l'état de charge courant des moyens de stockage d'énergie pour adapter les paramètres électriques de la puissance électrique à fournir, ou pour déclencher l'application du courant de recharge lorsque certaines contraintes sont vérifiées, telles que l'immobilisation du bus, mise à la terre certifiée, etc.

Une telle installation peut prendre la forme d'un connecteur mâle en tant que dispositif embarqué et d'un connecteur femelle en tant que dispositif au sol ; d'un pantographe en tant que dispositif embarqué et d'une perche aérienne pour le dispositif au sol; ou encore un frotteur en tant que dispositif embarqué et un plot implanté dans la voie en tant que dispositif au sol.

Une telle installation nécessitant l'établissement de quatre liaisons en connectant électriquement chaque paire de contacts d'un ensemble de quatre paires, une paire comportant un contact sur le dispositif embarqué et un contact correspondant sur le dispositif au sol, reste complexe à fabriquer et à maintenir en état de fonctionnement.

Pour la recharge par conduction d'un bus, il est aussi actuellement envisagé une installation de recharge par conduction d'un véhicule équipé d'un moyen de stockage d'énergie électrique comportant exclusivement deux contacts électriques entre le dispositif au sol et le dispositif embarqué, à savoir un contact de phase et un contact de neutre, où le contact de neutre du dispositif au sol est connecté électriquement à une prise de terre, voir par exemple JP 2009 045967 et US 3 955 657.

Il y a un besoin de simplification tout en garantissant la sécurité des personnes lors de la recharge, ou au moins d'une amélioration de la sécurité des personnes lors de la recharge, auxquelles la présente invention répond. A cet effet, l'invention a pour objet une installation de recharge comme revendiquée par la revendication 1.

Suivant des modes particuliers de réalisation, l'installation comporte une ou plusieurs des caractéristiques suivantes, prises isolément ou suivant toutes les combinaisons techniquement possibles :
- le contact de neutre du dispositif embarqué comporte une première électrode et une seconde électrode, et le contact de phase du dispositif embarqué comporte une première électrode et une seconde électrode, la paire de premières électrodes constituant les bornes d'entrée d'un premier circuit pour appliquer une puissance électrique de recharge au moyen de stockage d'énergie et la paire de secondes électrodes constituant les bornes d'entrée d'un second circuit pour établir une connexion de mise à la terre et contrôler celle-ci au cours de la recharge, le second circuit appartenant au moyen de contrôle de mise à la terre.
- le dispositif au sol est propre à se déconnecter de la source de puissance électrique lorsque le signal électrique de test émis par l'émetteur n'est pas reçu par le récepteur ou lorsque le signal de réception du signal de test émis par le récepteur n'est pas reçu par l'émetteur ou est indicatif d'une rupture d'un contact électrique entre les paires de contacts de neutre ou la paire de contacts de phase.
- le dispositif embarqué comporte une liaison entre le contact de phase et le contact de neutre constitué d'un circuit bouchon en série avec le primaire d'un transformateur, au secondaire duquel est connecté le récepteur, et dans laquelle le dispositif au sol comporte une liaison entre le contact de phase et le contact de neutre constitué d'un circuit bouchon en série avec le primaire d'un transformateur, au secondaire duquel est connecté l'émetteur.
- Installation dédiée à un véhicule du type bus, dont le châssis est normalement isolé électriquement de la terre.
- Installation dans laquelle : le dispositif au sol comporte un plot implanté dans la chaussée de circulation du véhicule, de manière à être affleurant à la surface de ladite chaussée, ledit plot portant les contacts de phase et de neutre du dispositif au sol ; et le dispositif embarqué comporte au moins un frotteur, portant les contacts de phase et de neutre du dispositif embarqué, monté mobile par rapport au châssis du véhicule et propre à être déplacer vers le plot pour établir le contact électrique entre les paires de contacts.
- le dispositif embarqué est monté sous une caisse du véhicule, ledit véhicule devant être placé au-dessus du plot pour permettre l'établissement d'un contact électrique entre les paires de contacts des dispositifs au sol et embarqués, le plot étant alors situé à l'intérieur de l'empreinte au sol du véhicule.

L'invention a également pour objet un procédé de recharge pour recharger un véhicule en utilisant l'installation précédente, caractérisé en ce qu'il comporte les étapes consistant à : arrêter le véhicule dans une position de recharge prédéfinie par rapport à une station de recharge ; mettre en contact la paire de contact du dispositif embarqué avec la paire de contacts du dispositif au sol ; recharger en appliquant une puissance électrique générée par la source au moyen de stockage d'énergie, via le dispositif au sol et le dispositif embarqué ; contrôler la mise à la terre d'un châssis du véhicule à chaque instant de la recharge, toute vérification négative conduisant à interrompre la recharge.

L'invention et ses avantages seront mieux compris à la lecture de la description détaillée qui va suivre d'un mode de réalisation particulier de l'invention, donné uniquement à titre d'exemple illustratif et non limitatif. Cette description est faite en se référant aux dessins annexés sur lesquels :
- La figure 1 représente schématiquement l'installation de recharge selon l'invention ;
- La figure 2 représente sous forme de blocs le procédé de recharge utilisant l'installation de la figure 1 ; et,
- La figure 3 représente schématiquement une variante de l'installation de recharge de la figure 1.

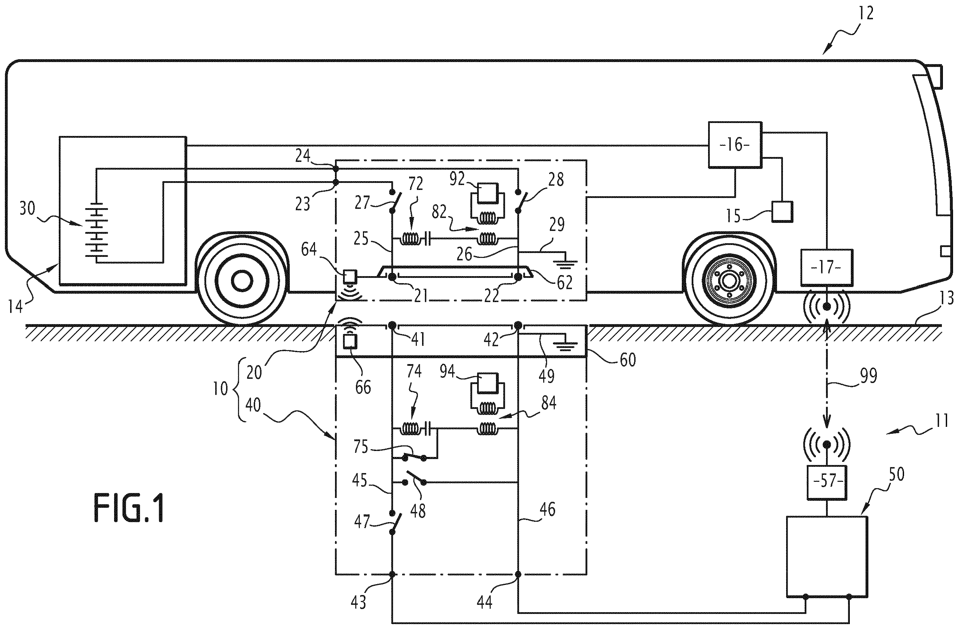

La figure 1 représente un mode de réalisation d'une installation 10 de recharge par conduction permettant l'application, en sécurité, d'une puissance électrique délivrée par une source 50 d'une station de recharge 11 à demeure, à un moyen de stockage d'énergie électrique 30 appartenant à un circuit de puissance 14 d'un bus 12.

Le bus 12 comporte un dispositif de contrôle commande 16.

Il comporte un module de mesure d'isolement 15, pour s'assurer que le circuit de puissance 14 est isolé galvaniquement du châssis du bus 12 à tout instant.

Il comporte également un module de radio communication 17 propre à établir une liaison de communication sans fil 99 avec un module de radio communication 57 dont est équipée la source 50. Il s'agit par exemple d'une liaison sans fil mettant en œuvre un protocole de communication conforme au protocole connu sous la dénomination Bluetooth®.

L'installation 10 comporte, embarqué à bord du bus 12, un dispositif embarqué 20.

En entrée, le dispositif embarqué 20 comporte uniquement deux bornes, formant deux contacts, respectivement un contact de phase 21 et un contact de neutre 22. En variante, il peut s'agir d'un contact négatif porté à un potentiel négatif et d'un contact positif porté à un contact positif.

En sortie, le dispositif embarqué 20 est connecté par des première et seconde bornes de sortie 23 et 24 aux bornes du moyen de stockage d'énergie électrique 30, par exemple constitué d'une batterie, mais d'autres solutions techniques sont connues de l'homme du métier.

L'installation 10 comporte au moins un dispositif au sol 40, faisant partie de la station de recharge 11. Avantageusement l'installation comporte deux dispositifs au sol, le second redondant le premier.

En entrée, le dispositif au sol 40 est connecté par des première et seconde bornes d'entrée 43 et 44 aux bornes de la source 50. La source 50 est par exemple une sous-station d'alimentation d'un réseau électrique.

En sortie, le dispositif au sol 40 comporte uniquement deux bornes de sortie formant deux contacts, respectivement un contact de phase 41 et un contact de neutre 42.

Dans le mode de réalisation présenté ici en détail, les contacts 41 et 42 du dispositif au sol 40 sont intégrés dans un plot 60, implanté dans la chaussée 13 de manière à présenter une surface supérieure affleurant avec la surface de la chaussée de circulation du bus 12.

Le dispositif embarqué 20 comporte alors un patin 62, aussi dénommé frotteur ou système de captation, monté sous la caisse du bus 12 et propre à être déplacé verticalement entre une position haute à l'écart du plot 60 et une position basse en contact avec le plot 60. Dans la position basse, le contact de phase 21 du dispositif embarqué 20 est en contact électrique avec le contact de phase 41 du dispositif au sol 40 et le contact de neutre 22 du dispositif embarqué 20 est en contact électrique avec le contact de neutre 42 du dispositif au sol 40.

Le dispositif embarqué 20 comporte une liaison entre une maille de phase 25 qui relie le contact de phase 21 et la première borne de sortie 23, et une maille de neutre 26 qui relie le contact de neutre 22 et la seconde borne de sortie 24.

Cette liaison comporte un circuit bouchon 72, comportant une inductance et un condensateur, en série avec l'enroulement primaire d'un transformateur 82.

Au secondaire du transformateur 82, le dispositif embarqué 20 comporte un récepteur 92.

Le circuit bouchon 72 se caractérise par une fréquence d'accord f0.

A proximité du contact de neutre 22, la maille de neutre 26 est connectée électriquement au châssis du bus 12. Ceci est représenté schématiquement sur la figure 1 par la liaison de masse 29.

Entre cette liaison et les bornes de sortie 23, 24, chaque maille 25, 26 est équipée d'un contacteur commandé, respectivement 27 et 28, propre à basculer d'un état ouvert à un état fermé.

Le dispositif embarqué 20 comporte un module de communication sans fil 64 à faible portée par exemple du type RFID, porté par le frotteur 62 et connecté au récepteur 92.

Le dispositif au sol 40 comporte une liaison entre une maille de phase 45 qui relie le contact de phase 41 et la première borne d'entrée 43 et une maille de neutre 46 qui relie le contact de neutre 42 et la seconde borne d'entrée 44.

Cette liaison comporte un circuit bouchon 74, comportant une inductance et un condensateur, en série avec l'enroulement primaire d'un transformateur 84.

Au secondaire du transformateur 84, le dispositif au sol 40 comporte un émetteur 94.

Le circuit bouchon 74 se caractérise par une fréquence d'accord qui est choisie pour être sensiblement égale à la fréquence d'accord du circuit bouchon 72.

A proximité du contact de neutre 42, la maille de neutre 46 est connectée électriquement à une prise de terre. Ceci est représenté schématiquement sur la figure 1 par la liaison de masse 49 ou de terre.

Entre le contact de phase 41 et la borne de sortie 43, la maille de phase 45 est équipée d'un commutateur commandé 47. De plus, un contacteur de sécurité 48 est placé entre la maille de phase et la maille de neutre. Le contacteur 48 est utilisé pour une mise en sécurité redondante, et n'est fermé que lors d'une défaillance interne au dispositif 40, ou lors d'une intervention de maintenance.

Enfin, un interrupteur 75 est placé en dérivation du circuit bouchon 74, entre le transformateur 84 et la maille de phase 45.

Le dispositif au sol 40 comporte un module de communication sans fil 66 à faible portée, par exemple du type RFID, propre à échanger des données avec le module conjugué 64. Le module 66 est porté par le plot 60 et est connecté à l'émetteur 94.

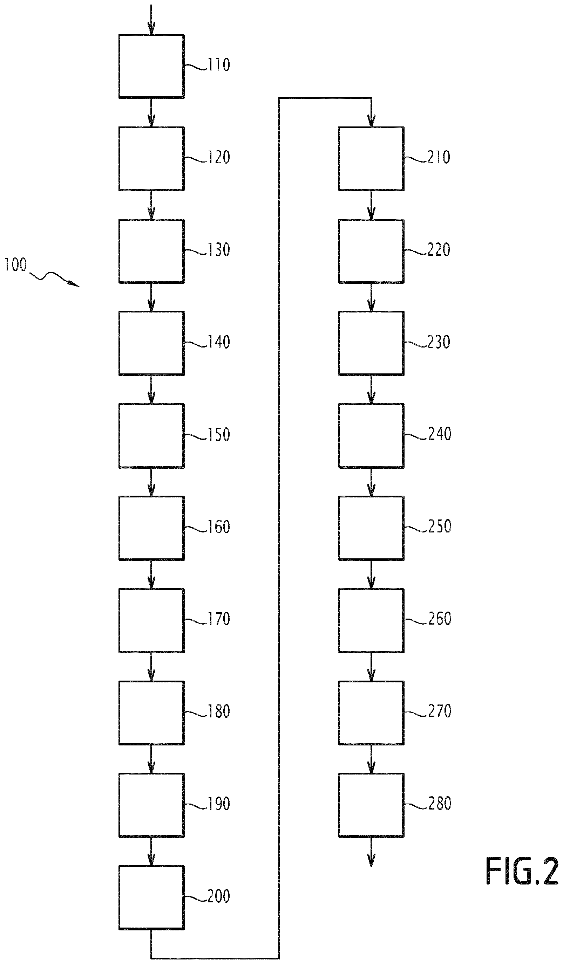

Le procédé de recharge 100 mis en œuvre pour recharger le moyen de stockage d'énergie 30 du bus 12 en utilisant l'installation 10 va maintenant être décrit en référence à la figure 2.

En autonomie (étape 110), le circuit de puissance 14 est isolé galvaniquement du châssis du bus 12. En particulier, le contacteur 28 est ouvert, de sorte que le moyen de stockage d'énergie électrique 30 est isolé du châssis. Le dispositif de mesure d'isolement 15 vérifie à chaque instant que le châssis est effectivement isolé du circuit de puissance 14.

Le module de communication sans fil 66 au sol émet en permanence un signal de localisation.

L'émetteur 94 du dispositif au sol 40 émet (étape 120) en permanence un signal codé au secondaire du transformateur 84. Cependant, le primaire du transformateur 84 étant dans un circuit ouvert, aucun courant ne circule au primaire du transformateur 84.

Lorsque le conducteur souhaite recharger le bus 12 qu'il conduit, il l'approche d'une station de recharge 11 et l'arrête (étape 130) dans une position de recharge prédéfinie, indiquée par des marquages adaptés au sol. Dans cette position de recharge, le frotteur 62 se trouve à l'aplomb du plot 60.

A l'arrêt du bus, le dispositif de contrôle-commande 16 du bus 12 détecte la présence du plot 60 par la réception du signal de localisation émis par le module 66 et reçu par le module 64 correspondant embarqué à bord du bus. Le dispositif de contrôle-commande 16 du bus 12 immobilise le bus. Il initie le processus de recharge en commandant la descente du frotteur 62 pour l'appliquer contre le plot 60 (étape 140).

Se faisant, le contact de phase 21 du dispositif bord 20 vient en contact électrique du contact de phase 41 du dispositif au sol 40 et le contact de neutre 22 du dispositif embarqué 20 vient en contact du contact de neutre 42 du dispositif au sol 40.

Dans ces conditions, un circuit fermé est établi (étape 150) comportant le primaire du transformateur 84, la maille de neutre 46 du dispositif au sol 20, la maille de neutre 26 du dispositif embarqué 40, le primaire du transformateur 82, le circuit bouchon 72, la maille de phase 25 du dispositif embarqué 20, la maille de phase 45 du dispositif au sol 40 et le contact fermé 75.

De la sorte, le signal codé appliqué par l'émetteur 94 au secondaire du transformateur 84 est transmis à travers ce circuit fermé. Il est transmis sous la forme d'un signal électrique de test, qui est un courant alternatif à une fréquence choisie pour correspondre à la fréquence d'accord f0 des circuits bouchon 74 et 72.

Ce courant traversant le primaire du transformateur 84, il peut être détecté au secondaire par le récepteur 92.

Ainsi, le récepteur 92 reçoit (étape 160) le signal codé. Le récepteur 92 utilise ce signal codé pour élaborer un message de réception du signal électrique de test.

Ce message est ensuite transmis (étape 170) du dispositif embarqué 20 vers le dispositif au sol 40 au moyen de la liaison radioélectrique établie entre les modules de communication sans fil 64 et 66.

Le récepteur 66 reçoit (étape 180) le message de réception du signal électrique de test.

La réception par le sol du message de réception du signal électrique de test indique que le contact entre les paires de contacts de l'installation est établi correctement, en particulier que le châssis du bus 12 est au potentiel de terre, la liaison 29 étant en continuité électrique avec la liaison 49, via la maille de neutre 26 et la maille de neutre 46 connectées entre elles.

A ce stade, l'éventuelle mesure d'isolement réalisée par le dispositif de mesure d'isolement du bus est inhibée (étape 190) par le dispositif de contrôle-commande 16 du bus 12, le récepteur 92 indiquant qu'il reçoit le signal de test.

A l'étape suivante, la mise à la terre de la maille de phase 45 du dispositif au sol 40 est déconnectée (étape 200), puisque le contact de phase 41 est physiquement inaccessible (se situant sous le bus) et le châssis du bus 12 étant raccordé à la terre. Le commutateur 75 est donc basculé en ouverture.

Une fois le commutateur 75 ouvert, le signal de test passe à travers le circuit bouchon 74.

Le moyen de contrôle de mise à la terre, réalisé dans le présent mode de réalisation par l'émission d'un signal de test par le sol, la réception du signal de test et l'émission d'un message de réception du signal de test par le bord, et enfin la réception du message de réception du signal de test par le sol, assure une vérification permanente au cours du processus de charge.

Toute perte de la mise à la terre, quelle qu'en soit la cause, conduit à interrompre la recharge. Dans le présent mode de réalisation, cela passe par la déconnexion immédiate du plot 60 de la source 50 par ouverture du contacteur 47, ainsi que par l'arrêt momentané de l'émission du signal de test par l'émetteur 94, entraînant à bord l'ouverture des contacts 27 et 28, et la fermeture du contacteur 75.

Il est à noter que le courant porteur du signal codé est émis à la fréquence d'accord f0 des circuits bouchons 72 et 74. Ainsi, les circuits bouchon empêchent toute circulation de courant de fréquence faible (en particulier du courant de recharge) entre la maille de phase et de maille de neutre correspondante (le condensateur se comportant comme un circuit ouvert à basse fréquence), mais permet en revanche, la circulation d'un courant de fréquence proche de la fréquence d'accord (en particulier le courant porteur du signal de test).

Le contacteur 47 est ensuite fermé (étape 210) pour établir un contact électrique entre la source 50 et le dispositif embarqué 20, via le dispositif au sol 40.

Puis, par la liaison de communication sans fil 99 entre le dispositif de contrôle-commande 16 du bus 12 et la source 50, la source 50 est informée (étape 220) qu'une connexion est établie.

La source 50 adapte les caractéristiques courant de recharge à générer et à appliquer aux bornes du dispositif au sol 40.

Avantageusement, une mesure d'isolement entre les bornes d'entrée 43 et 44 du dispositif au sol 40 est alors réalisée par la source 50. Cette mesure est réalisée à basse impédance, puisque le plot 60 au sol présente des courants de fuite vers la terre élevés (résistance de 10 à 1000 Ohms en cas de plot mouillé par la pluie).

Puis, la source 50 informe (étape 230) le dispositif de contrôle-commande 16 du bus, via la liaison de communication sans fil 99, que la recharge peut débuter.

Le dispositif de contrôle-commande 16 du bus 12 bascule alors (étape 240) en fermeture les contacteurs 27 et 28 du dispositif embarqué 20 pour connecter ce dernier aux bornes du moyen de stockage d'énergie 30.

La charge commence alors (étape 250).

Elle est maintenue jusqu'à réception (étape 260) par le conducteur du bus d'une demande d'interruption d'alimentation.

La source 50, informée de l'interruption de l'alimentation, cesse d'appliquer une puissance électrique entre les bornes d'entrée du dispositif au sol 40. Les contacteurs 27 et 28 sont ouverts (étape 270) et le dispositif au sol 40 bascule en ouverture le contacteur 47, et en fermeture le contacteur de mise à la terre 75.

Le frotteur 62 peut alors être actionné pour être replacé dans sa position haute, avant que le bus ne reparte (étape 280).

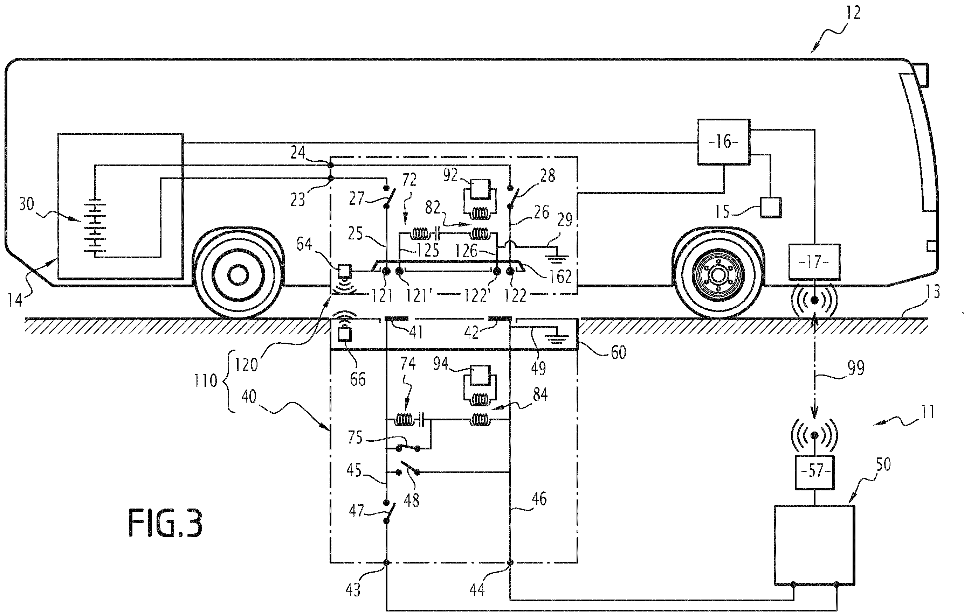

Une variante de réalisation est représentée à la figure 3. Sur cette figure, un élément identique à un élément de la figure 1 est désigné par le chiffre de référence utilisé, sur la figure 1, pour désigner cet élément identique et un élément similaire à un élément de la figure 1 est désigné par le chiffre de référence utilisé, sur la figure 1, pour désigner cet élément similaire, augmenté d'une centaine.

Dans cette variante de réalisation, le dispositif embarqué 120 de l'installation 110 comporte un premier circuit pour véhiculer la puissance électrique vers la batterie et un second circuit pour établir la connexion de la mise à la terre et son contrôle. Les premier et second circuits sont indépendants l'un de l'autre. Cette indépendance est nécessaire afin d'éviter les effets d'une différence de potentielle liée à la formation d'un arc électrique entre paire de contacts lorsque le frotteur est rapproché ou écarté du plot au sol.

Ainsi, le frotteur 162 porte des contacts qui sont constitués de deux électrodes.

Plus précisément, au-dessus du contact de phase 41 du plot au sol 60 et venant en contact simultanément avec celui-ci, le contact de phase du frotteur 162 est constitué de deux électrodes 121 et 121' distinctes et électriquement isolées l'une de l'autre.

De même, au-dessus du contact de neutre 42 du plot au sol 60 et venant en contact simultanément avec celui-ci, le contact de neutre du frotteur 162 est constitué de deux électrodes 122 et 122' distinctes et électriquement isolées l'une de l'autre.

Ainsi, le premier circuit (électrode 121, maille de phase 25, contacteur 27, moyen de stockage d'énergie, contacteur 28, maille de neutre 26 et électrode 122) est dédié et adapté au passage d'un courant de recharge.

Le second circuit (électrode 121', circuit bouchon 72, primaire du transformateur 82 et électrode 122', ainsi que liaison 29 à la masse côté de l'électrode 122') est dédié et adapté à l'établissement de la connexion de mise à la terre et à la circulation du signal de contrôle de mise à la terre.

## Revendications

1. Installation (10) de recharge par conduction comportant, à bord d'un véhicule (12) équipé d'un moyen de stockage d'énergie électrique (30), un dispositif embarqué (20), relié électriquement au moyen de stockage d'énergie électrique (30) et muni de deux contacts électriques, à savoir un contact de phase (21) et un contact de neutre (22), et, au sol, un dispositif au sol (40), conjugué du dispositif embarqué (20), relié à une source de puissance électrique (50) et comportant deux contacts électriques, à savoir un contact de phase (41) et un contact de neutre (42), chaque contact électrique du dispositif au sol (40) étant propre à être mis en contact d'un contact correspondant du dispositif embarqué (20) et l'installation étant propre à appliquer une puissance électrique de recharge délivrée par la source de puissance électrique (50) au moyen de stockage d'énergie électrique (30),
**caractérisée en ce que** le contact de neutre (22) du dispositif embarqué (20) est connecté électriquement à un châssis du véhicule (12) et le contact de neutre (42) du dispositif au sol (40) est connecté électriquement à une prise de terre,
**en ce que** l'installation comporte un moyen de contrôle de mise à la terre propre à vérifier, à chaque instant de l'application d'une puissance électrique de recharge au moyen de stockage d'énergie électrique (30) que le contact de neutre (22) du dispositif embarqué (20) est en contact électrique avec le contact de neutre (42) du dispositif au sol (40) et que le contact de phase (21) du dispositif embarqué (20) est en contact électrique avec le contact de phase (41) du dispositif au sol (40)
le moyen de contrôle comportant un émetteur (94), équipant un dispositif parmi le dispositif au sol et le dispositif embarqué, propre à appliquer un signal électrique de test à un circuit électrique incluant la paire de contacts de phase (21, 41) et la paire de contact de neutre (22, 42) et un récepteur (92), équipant l'autre dispositif, propre à recevoir le signal électrique de test uniquement lorsque il y a un contact effectif entre la paire de contacts de phase (21, 41) et un contact effectif entre la paire de contact de neutre (22, 42), et propre à émettre un signal de réception du signal électrique de test vers l'émetteur, le signal de réception étant transmis au moyen d'une liaison sans fil établie entre un module de communication sans fil (64) du dispositif embarqué (20) et une module de communication sans fil (66) du dispositif au sol (40).

2. Installation (110) selon la revendication 1, dans laquelle le contact de neutre du dispositif embarqué (120) comporte une première électrode (122) et une seconde électrode (122'), et le contact de phase du dispositif embarqué (120) comporte une première électrode (121) et une seconde électrode (121'), la paire de premières électrodes constituant les bornes d'entrée d'un premier circuit pour appliquer une puissance électrique de recharge au moyen de stockage d'énergie (30) et la paire de secondes électrodes constituant les bornes d'entrée d'un second circuit pour établir une connexion de mise à la terre et contrôler celle-ci au cours de la recharge, le second circuit appartenant au moyen de contrôle de mise à la terre.

3. Installation (10) selon la revendication 2 ou la revendication 3 dans laquelle le dispositif au sol (40) est propre à se déconnecter de la source de puissance électrique (50) lorsque le signal électrique de test émis par l'émetteur (94) n'est pas reçu par le récepteur (92) ou lorsque le signal de réception du signal de test émis par le récepteur (92) n'est pas reçu par l'émetteur (94) ou est indicatif d'une rupture d'un contact électrique entre les paires de contacts de neutre (22, 42) ou la paire de contacts de phase (21, 41).

4. Installation (10) selon la revendication 3, dans laquelle le dispositif embarqué (20) comporte une liaison entre le contact de phase (21) et le contact de neutre (22) constitué d'un circuit bouchon (72) en série avec le primaire d'un transformateur (82), au secondaire duquel est connecté le récepteur (92), et dans laquelle le dispositif au sol (40) comporte une liaison entre le contact de phase (41) et le contact de neutre (42) constitué d'un circuit bouchon (74) en série avec le primaire d'un transformateur (84), au secondaire duquel est connecté l'émetteur (94).

5. Installation (10) selon l'une quelconque des revendications précédentes, dédiée à un véhicule du type véhicule à pneus, dont le châssis est normalement isolé électriquement de la terre.

6. Installation (10) selon l'une quelconque des revendications précédentes, dans laquelle :
- le dispositif au sol (40) comporte un plot (60) implanté dans la chaussée (13) de circulation du véhicule, de manière à être affleurant à la surface de ladite chaussée, ledit plot portant les contacts de phase (41) et de neutre (42) du dispositif au sol (40) ; et,
- le dispositif embarqué (20) comporte au moins un frotteur (62), portant les contacts de phase (21) et de neutre (22) du dispositif embarqué (20), monté mobile par rapport au châssis du véhicule (12) et propre à être déplacer vers le plot pour établir le contact électrique entre les paires de contacts.

7. Installation (10) selon la revendication 6, dans laquelle le dispositif embarqué (20) est monté sous une caisse du véhicule (12), ledit véhicule devant être placé au-dessus du plot (60) pour permettre l'établissement d'un contact électrique entre les paires de contacts des dispositifs au sol et embarqués, le plot (60) étant alors situé à l'intérieur de l'empreinte au sol du véhicule (12).

## Patentansprüche

1. Einrichtung (10) zum Wiederaufladen via Leitung, aufweisend, an Bord eines Fahrzeugs (12), das mit einem Mittel zur Speicherung elektrischer Energie (30) ausgerüstet ist, eine bordseitige Vorrichtung (20), die mit dem Mittel zur Speicherung elektrischer Energie (30) verbunden ist und mit zwei elektrischen Kontakten versehen ist, nämlich einem Phase-Kontakt (21) und einem Neutral-Kontakt (22), und, am Boden, eine bodenseitige Vorrichtung (40), die mit der bordseitigen Vorrichtung (20) verknüpft ist, mit einer elektrischen Leistungsquelle (50) verbunden ist und zwei elektrische Kontakte aufweist, nämlich einen Phase-Kontakt (41) und einen Neutral-Kontakt (42), wobei jeder elektrische Kontakt der bodenseitigen Vorrichtung (40) imstande ist, mit einem korrespondierenden Kontakt der bordseitigen Vorrichtung (20) in Kontakt zu treten, und wobei die Einrichtung imstande ist, eine elektrische Leistung zur Wiederaufladung, die von der elektrischen Leistungsquelle (50) geliefert wird, auf die Mittel zur Speicherung elektrischer Energie (30) aufzubringen, **dadurch gekennzeichnet, dass** der Neutral-Kontakt (22) der bordseitigen Vorrichtung (20) elektrisch mit einem Chassis des Fahrzeugs (12) verbunden ist und der Neutral-Kontakt (42) der bodenseitigen Vorrichtung (40) elektrisch mit einer Erdleitung verbunden ist,
und dass die Einrichtung aufweist ein Mittel zur Überwachung der korrekten Betriebserdung, das imstande ist zu verifizieren, dass in jedem Moment der Aufbringung einer elektrischen Leistung zur Wiederaufladung auf das Mittel zur Speicherung elektrischer Energie (30) der Neutralkontakt (22) der bordseitigen Vorrichtung (20) im elektrischen Kontakt mit dem Neutral-Kontakt (42) der bodenseitigen Vorrichtung (40) ist und der Phase-Kontakt (21) der bordseitigen Vorrichtung (20) im elektrischen Kontakt mit dem Phase-Kontakt (41) der bodenseitigen Vorrichtung (40) ist,
wobei das Mittel zur Überwachung aufweist einen Sender (94), der ausgestattet ist mit einer Vorrichtung aus der bodenseitigen Vorrichtung und der bordseitigen Vorrichtung, und imstande ist, ein elektrisches Testsignal auf einen elektrischen Schaltkreis aufzubringen, der das Paar Phasen-Kontakte (21, 41) und das Paar Neutral-Kontakte (22, 42) umfasst, und einen Empfänger (92), mit dem die andere Vorrichtung ausgestattet ist und der imstande ist, das elektrische Testsignal einzig dann zu empfangen, wenn es einen effektiven Kontakt zwischen dem Paar Phasen-Kontakte (21, 41) und einen effektiven Kontakt zwischen dem Paar Neutral-Kontakte (22, 42) gibt, und imstande ist, ein Empfangssignal des elektrischen Testsignals zu dem Sender zu senden, wobei das Empfangssignal mittels einer drahtlosen Verbindung übertragen wird, die zwischen einem drahtlosen Kommunikationsmodul (64) der bordseitigen Vorrichtung (20) und einem drahtlosen Kommunikationsmodul (66) der bodenseitigen Vorrichtung (40) eingerichtet ist.

2. Einrichtung (110) gemäß Anspruch 1, wobei der Neutral-Kontakt der bordseitigen Vorrichtung (120) aufweist eine erste Elektrode (122) und eine zweite Elektrode (122'), und wobei der Phase-Kontakt der bordseitigen Vorrichtung (120) aufweist eine erste Elektrode (121) und eine zweite Elektrode (121'), wobei das Paar erster Elektroden die Eingangspole eines ersten Schaltkreises zum Aufbringen einer elektrischen Leistung zur Wiederaufladung auf das Mittel zur Speicherung von Energie (30) bilden und das Paar zweiter Elektroden die Eingangselektroden eines zweiten Schaltkreises zum Einrichten einer Verbindung zur Betriebserdung und zum Überwachen derselben im Laufe des Wiederaufladens bilden, wobei der zweite Schaltkreis zu dem Mittel zur Überwachung der Betriebserdung gehört.

3. Einrichtung (10) gemäß Anspruch 2 oder Anspruch 3, wobei die bodenseitige Vorrichtung (40) imstande ist, sich von der elektrischen Leistungsquelle (50) abzukuppeln, wenn das elektrische Testsignal, das von dem Sender (94) ausgesendet wird, nicht von dem Empfänger (92) empfangen wird oder wenn das Empfangssignal des Testsignals, das von dem Empfänger (92) ausgesendet wird, nicht von dem Sender (94) empfangen wird oder anzeigend ist für eine Unterbrechung eines elektrischen Kontakts zwischen den Paaren Neutral-Kontakten (22, 42) oder dem Paar Phase-Kontakten (21, 41).

4. Einrichtung (10) gemäß Anspruch 3, wobei die bordseitige Vorrichtung (20) aufweist eine Verbindung zwischen dem Phase-Kontakt (21) und dem Neutral-Kontakt (22), gebildet aus einem Sperrschaltkreis (72) in Serie mit der Primärseite eines Transformators (82), mit dessen Sekundärseite der Empfänger (92) verbunden ist, und wobei die bodenseitige Vorrichtung (40) eine Verbindung zwischen dem Phase-Kontakt (41) und dem Neutral-Kontakt (42) aufweist, gebildet aus einem Sperrschaltkreis (74) in Serie mit der Primärseite eines Transformators (84), mit dessen Sekundärseite der Sender (94) verbunden ist.

5. Einrichtung (10) gemäß irgendeinem der vorhergehenden Ansprüche, die einem Fahrzeug des Typs Reifen-Fahrzeug zugeordnet ist, dessen Chassis normalerweise von der Erde elektrisch isoliert ist.

6. Einrichtung (10) gemäß irgendeinem der vorhergehenden Ansprüche, wobei:
- die bodenseitige Vorrichtung (40) eine Kontaktstelle (60) aufweist, die in einer Weise in die Fahrzeugverkehr-Straße (13) eingebracht ist, dass sie an der Oberfläche der besagten Straße zum Vorschein kommt, wobei die Kontaktstelle den Phase (41)- und den Neutral (42)-Kontakt der bodenseitigen Vorrichtung (40) trägt, und
- die bordseitige Vorrichtung (20) wenigstens einen Schleifer (62), der den Phase (21)- und den Neutral (22)-Kontakt der bordseitigen Vorrichtung (20) trägt und der bezüglich des Chassis des Fahrzeugs (12) bewegbar montiert ist und imstande ist, zu der Kontaktstelle hin verlagert zu werden zum Erstellen des elektrischen Kontakts mit den Kontakte-Paaren.

7. Einrichtung (10) gemäß Anspruch 6, wobei die bordseitige Vorrichtung (20) unter einem Gehäuse des Fahrzeugs (12) montiert ist, wobei das Fahrzeug über der Kontaktstelle (60) platziert sein muss zum Erlauben des Erstellens eines elektrischen Kontakts zwischen den Kontakte-Paaren der bodenseitigen und der bordseitigen Vorrichtung, wobei die Kontaktstelle (60) dann im Inneren des Abdrucks zum Boden des Fahrzeugs (12) angeordnet ist.

## Claims

1. An installation (10) for electric conduction recharging including, on-board a vehicle (12) equipped with an electric energy storage means (30), an on-board device (20), electrically connected to the electric energy storage means (30) and provided with two electric contacts, namely a phase contact (21) and a neutral contact (22), and, on the ground, a ground device (40), designed to cooperate with the on-board device (20), connected to a source of electric power (50) and including two electric contacts, namely a phase contact (41) and a neutral contact (42), each electric contact of the ground device (40) being able to be put into contact with a corresponding contact of the on-board device (20) and the installation being able to apply an electric recharging power delivered by the electric power source (50) to the electric energy storage means (30),
**characterized in that** the neutral contact (22) of the on-board device (20) is electrically connected to a chassis of the vehicle (12) and the neutral contact (42) of the ground device (40) is electrically connected to a ground connection,
**in that** the installation includes a ground connection controlling means able to check, at each instant of the application of an electric recharging power to the electric energy storage means (30), that the neutral contact (22) of the on-board device (20) is in electrical contact with the neutral contact (42) of the ground device (40) and that the phase contact (21) of the on-board device (20) is in electric contact with the phase contact (41) of the ground device (40),
the ground connection controlling means including a transmitter (94), equipping a device from among the ground device and the on-board device, able to apply an electric test signal to an electric circuit including the pair of phase contacts (21, 41) and the pairs of neutral contacts (22, 42) and a receiver (92), equipping the other device, able to receive the electric test signal only when there is an effective contact between the pair of phase contacts (21, 41) and an effective contact between the pair of neutral contacts (22, 42), and able to transmit a signal of reception of the electric test signal towards the transmitter,
the signal of reception being transmitted by means of a wireless link established between a wireless communication module (64) of the on-board device (20) and a wireless communication module (66) of the ground device (40).

2. The installation (110) according to claim 1, wherein the neutral contact of the on-board device (120) includes a first electrode (122) and a second electrode (122'), and the phase contact of the on-board device (120) includes a first electrode (121) and a second electrode (121'), the pair of first electrodes forming the input terminals of a first circuit for applying an electric recharging power to the energy storage means (30) and the pair of second electrodes forming the input terminals of a second circuit for establishing a ground connection and for controlling the latter during the recharging, the second circuit belonging to the ground connection controlling means.

3. The installation (10) according to claim 1 or claim 2, wherein the ground device (40) is able to disconnect itself from the electric power source (50) when the electric test signal transmitted by the transmitter (94) is not received by the receiver (92) or when the signal of reception of the test signal transmitted by the receiver (92) is not received by the transmitter (94) or is indicative of a break of an electric connectivity between the pairs of neutral contacts (22, 42) or the pair of phase contacts (21, 41).

4. The installation (10) according to claim 3, wherein the on-board device (20) includes a connection between the phase contact (21) and the neutral contact (22) consisting of a wave trap circuit (72) in series with the primary of a transformer (82), to the secondary of which is connected the receiver (92), and wherein the ground device (40) includes a connection between the phase contact (41) and the neutral contact (42) consisting of a wave trap circuit (74) in series with the primary of a transformer (84), to the secondary of which is connected the transmitter (94).

5. The installation (10) according to any of the preceding claims, dedicated to a vehicle of a tyre vehicle type, the chassis of which is normally electrically insulated from the ground.

6. The installation (10) according to any of the preceding claims, wherein:
- the ground device (40) includes a pad (60) implanted in the roadway (13) for the circulation of the vehicle, so as to be flushed with the surface of said roadway, said pad bearing the phase (41) and neutral (42) contacts of the ground device (40); and,
- the on-board device (20) includes at least one current collector (62), bearing the phase (21) and neutral (22) contacts of the on-board device (20), mounted so as to be movable relatively to the chassis of the vehicle (12) and able to be displaced towards the pad in order to establish the electric connectivity between the pairs of contacts.

7. The installation (10) according to claim 6, wherein the on-board device (20) is mounted under a body of the vehicle (12), said vehicle having to be placed above the pad (60) in order to allow the establishment of an electric connectivity between the pairs of contacts of the ground and on-board devices, the pad (60) being then located inside the ground footprint of the vehicle (12).
